# EUROPEAN PATENT SPECIFICATION

(11) **EP 3 176 037 B1**
(45) Date of publication and mention of the grant of the patent: **12.09.2018**
(21) Application number: 16201705.7
(22) Date of filing: 01.12.2016
(51) Int. Cl.: B60R 1/00

(54) **A REAR VISION SYSTEM FOR A MOTOR VEHICLE**
RÜCKANSICHTSYSTEM FÜR EIN KRAFTFAHRZEUG
SYSTÈME DE VISION ARRIÈRE POUR VÉHICULE AUTOMOBILE

(30) Priority: 03.12.2015 EP 15382603
(43) Date of publication of application: 07.06.2017
(73) Proprietor: Fico Mirrors, SA, 08028 Barcelona (ES)
(72) Inventor: GOMEZ TIMONEDA, David, 08232 VILADECAVALLS (Barcelona) (ES); LORIVAL, Frédéric, 08232 VILADECAVALLS (Barcelona) (ES); LÓPEZ GALERA, Robert, 08232 VILADECAVALLS (Barcelona) (ES); BIOSCA YUSTE, Oriol, 08232 VILADECAVALLS (Barcelona) (ES)
(74) Representative: Herrero & Asociados, S.L.

(56) References cited:
- EP-A1- 2 963 922
- WO-A1-2009/132617
- WO-A1-2013/093603
- DE-A1-102010 020 201
- US-A1- 2012 169 875

## Description

### Object of the invention

The present invention relates to a rear vision system for a motor vehicle, specifically designed for displaying different views of the rear area of the vehicle according to user and/or vehicle driving information.

An object of the invention is to provide a rear vision system capable of improving driving safety.

Another object of the present invention is to provide a rear vision system capable of adapting the displayed image in function of current user and/or driving information, by means of a simple and cost-effective system.

Another object of the present invention is to provide a rear vision system that improves driver comfort.

### Background of the invention

Rear vision systems conventionally provide a rear view of the vehicle. Most of these systems are only used to assist drivers when parking the vehicle or exiting from a parking space. Such rear vision systems are activated when the reverse gear is engaged. Once the system is activated, an image of an area behind the vehicle is displayed.

Other rear vision systems display a rear view of the vehicle regardless of the gear and the vehicle direction. Systems of this kind assist drivers in both forward and reverse driving. These systems generally display the information captured by the rear camera.

In order to further improve the assistance to the drivers, some systems have been adapted for monitoring the user and driving conditions, and modifying the displayed image according to said conditions.

The application US2014240860 A1 describes an example of this kind of systems. The application describes a motor vehicle with an external rear-view mirror, a mirror drive coupled to the external rear-view mirror for moving the external rear-view mirror into a first mirror position or a second mirror position, and a control unit operatively configured to control the mirror drive such that the external rear-view mirror is moved between the positions in function of the driving speed determined by a vehicle speed sensor. The invention requires mechanical adaptations for modifying the displayed image, since the mirror is physically moved between a first and a second position. In this way, the application provides a costly and complex solution.

Other solutions modify the displayed image according to driving conditions, and further considering the driving environment.

The application US2011202240 A1 is an example of these systems. Said application describes a dynamic range display system for a vehicle capable of displaying the image captured by a camera together with a dynamic vehicle path line, which overlaps the image captured by the camera. The invention modifies the displayed image in function of the driving speed. However, the invention requires the driving environment monitoring by using distance sensors. Such sensors increase the cost, and complicate the data processing.

Furthermore, the patent application US2012/0169875 A1, which shows the preamble of claim 1, describes a rearward view assistance apparatus in which the driver is capable of viewing rearward from a vehicle even when passengers are present on seats in the second and third rows of the vehicle. On the other hand, the application EP2963922 A1 describes a program and a device for controlling a vehicle, in particular to grasp a state around the vehicle on a basis of the captured image data is obtained.

Therefore, it would be desirable in the vehicle industry to develop a rear view system capable of modifying the displayed image according to current user and/or vehicle driving information, in a simple and cost-effective way.

### Description of the invention

The present invention overcomes the above mentioned drawbacks by providing a system adapted for displaying different areas of a captured image considering user and/or vehicle driving information.

The invention refers to a rear vision system for a motor vehicle according to claim 1.

The selection of different areas of the captured image allows displaying different views of the rearward area of the vehicle in function of current information, received from either the vehicle or a user. Thus, the driver is informed with a more detailed view of the area of interest. Thus, both the driving safety and the driver comfort are improved.

Also, since the invention only requires a camera and a controller, a simple and cost-effective solution is achieved by the invention.

### Brief description of the drawings

For a better comprehension of the invention, the following drawings are provided for illustrative and non-limiting purposes, wherein:
Figure 1 shows a schematic view of the rear vision system installed in a vehicle.
Figure 2 shows different views of the captured image. Figure 2a shows the captured image. Figures 2b and 2c show the different images that are displayed either when driving direction changes from a forward to a reverse driving direction or when a relative downward movement of the rear vision system is determined from the pitch angle sensor value or image processing.
Figure 3 shows different views of the captured image. Figure 3a shows the captured image. Figures 3b and 3c show the different images that are displayed either when the driving direction changes from reverse to a forward driving direction or when a relative upward movement of the rear vision system is determined from the pitch angle sensor value or image processing.
Figure 4 shows different views of the captured image. Figure 4a shows the captured image. Figures 4b and 4c show the different images that are displayed when the driving speed surpasses a predefined driving speed value.
Figure 5 shows different views of the captured image. Figure 5a shows the captured image. Figures 5b and 5c show the different images that are displayed when the driving speed falls below a predefined driving speed value.
Figure 6 shows different views of the captured image. Figure 6a shows the captured image. Figures 6b and 6c show the different images that are displayed in the event of a left lane change, and in the event of a change in a steering angle toward a leftward direction.
Figure 7 shows different views of the captured image. Figure 7a shows the captured image. Figures 7b and 7c show the different images that are displayed in the event of a right lane change, and in the event of a change in a steering angle toward a rightward direction.
Figure 8 shows different views of the captured image. Figure 8a shows the captured image. Figures 8b and 8c show the different images that are displayed when a relative rightward rotation of the rear vision system is determined from a roll angle sensor or image processing.
Figure 9 shows different views of the captured image. Figure 9a shows the captured image. Figures 9b and 9c show the different images that are displayed when a relative leftward rotation of the rear vision system is determined from a roll angle sensor or image processing.
Figure 10 shows different views of the captured image. Figure 10a shows the captured image. Figures 10b and 10c show the different images that are displayed when the system is adapted for performing road monitoring.
Figure 11 shows an exploded view of a rear-view mirror according to a preferential embodiment of the invention.

### Preferred embodiments of the invention

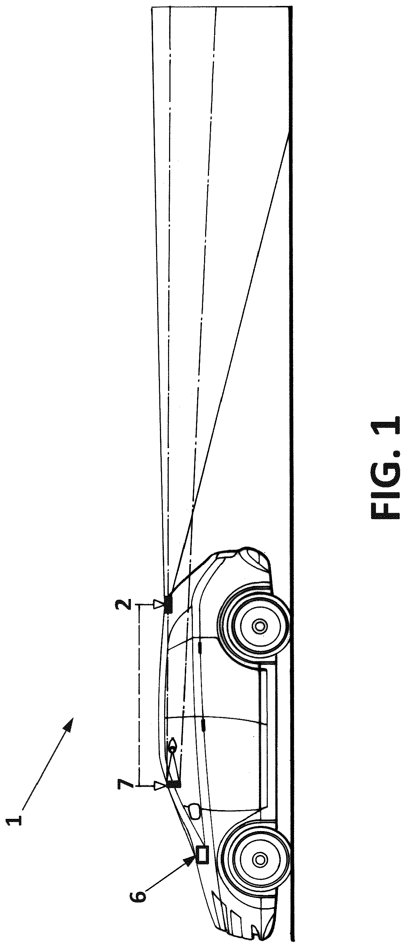

Figure 1 shows a schematic view of a rear vision system 1 installed in a vehicle. The system 1 comprises a camera 2 configured to capture an image 3, and a system controller 6 configured to display a first or a second area of the captured image 3 depending the vehicle driving and/or user information.

The camera 2 is placed at a part of the vehicle, i.e. the rear part, directed backwards to capture the area behind the vehicle. The camera 2 is in communication with the system controller 6 for receiving the image information associated to the image captured by the camera 2.

According to the invention, the system controller 6 is adapted for displaying a first area 5 of the captured image 3, and also for receiving and processing vehicle driving and/or user information for selecting a second area 8' - 8""' of the captured image 3 depending on the received information. The vehicle driving information at least corresponds to a change in driving direction from a forward driving direction to a reverse driving direction or vice versa, an increase or decrease in driving speed with respect to a predefined driving speed value, a lane change, a change in steering angle, a change in pitch angle, a change in roll angle, and road monitoring information. The user information can be provided by including a touching screen and/or keyboard, such that the user may manually select the area to be displayed (second area).This way, the user can scroll through the image to be shown, move it, and even enlarge or reduce it (zoom in/ zoom out).

According to a preferred embodiment, the system controller 6 is further adapted for selecting as second area 8' an area corresponding to a downward vertical displacement of the first area 5 such that the field of view is vertically displaced in a downward direction, when the driving direction is changed from a forward driving direction to a reverse driving direction, and selecting as second area 8' an area corresponding to an upward vertical displacement of the first area 5 such that the field of view is vertically displaced in an upward direction, when the driving direction is changed from a reverse driving direction to a forward driving direction.

According to another preferred embodiment, the system controller 6 is further adapted for determining a relative upward and downward movement of the system from a change in the pitch angle value. In this case, the system controller 6 is also adapted for selecting as second area 8' an area corresponding to a downward vertical displacement of the first area 5 such that the field of view is vertically displaced in a downward direction, when the system 1 is downwardly moved, and selecting as second area 8' an area corresponding to an upward vertical displacement of the first area 5 such that the field of view is vertically displaced in an upward direction, when the system 1 is upwardly moved.

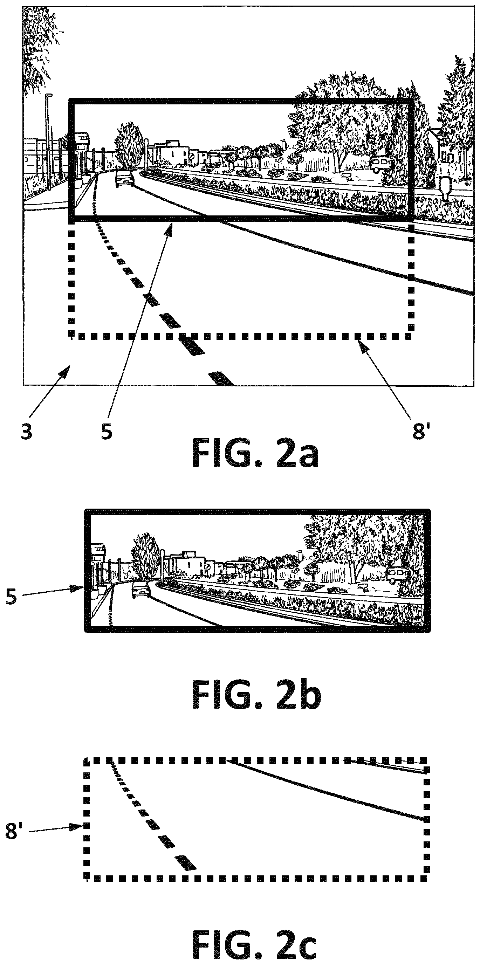

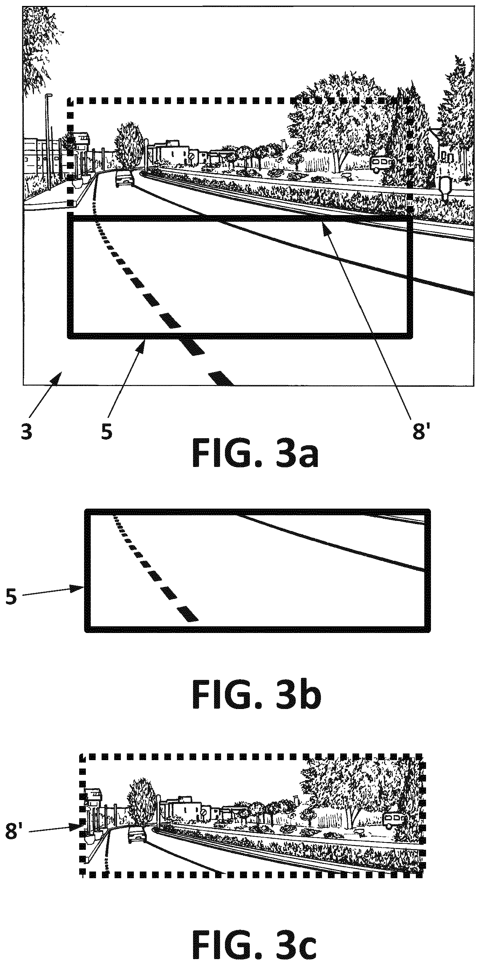

Figures 2 and 3 show the different areas that are displayed when the controller receives either a change in the driving direction or a change in the pitch angle value.

Preferably, the system 1 comprises a pitch angle sensor in communication with the controller 6 and operatively configured to obtain a pitch angle value.

Figure 2a shows the entire captured image 3, and indicates the first 5 and second 8' areas, respectively displayed in Figures 2b and 2c. According to the showed embodiment, the system controller 6 is configured to change from displaying the first area 5 to display a second area 8' corresponding to a downward vertical displacement of the first area 5, when the driving direction is changed from a forward driving direction to a reverse driving direction, and also when the system 1 (and vehicle) is vertically moved downwardly according to the pitch sensor information or image processing.

In both cases, a lower part of the captured image 3 is displayed. Thus, the invention provides a view more centred in the ground (road), avoiding showing details of the upper part of the image, needless when parking, when manoeuvring backwards, or when the vehicle undergoes a downward vertical movement.

Similarly, Figure 3a shows the entire captured image 3, and indicates the first 5 and second 8' areas, respectively displayed in Figures 3b and 3c. According to the embodiment, the system controller 6 is configured to change from displaying the first area 5 to display a second area 8' corresponding to an upward vertical displacement of the first area 5, when the driving direction is changed from a reverse driving direction to a forward driving direction, and also when the system 1 (and vehicle) is vertically moved upwardly according to the pitch sensor information or image processing.

In both cases, an upper part of the captured image 3 is displayed, so that the driver has a better view of the area of interest. In case of change in the driving direction, the driver is provided with a farthest view from the vehicle, and in case of change around the pitch axis, the driver is provided with a corrected view of the area of interest.

Preferably, the system controller 6 is configured for determining an upward and downward movement of the system 1 by comparing representative parameters contained on the actual and the former captured images 3, said representative parameters at least comprising the location of the road vanishing point on the captured image 3.

According to another preferred embodiment, the system controller 6 is adapted for selecting as second area 8" a part of the area of the first area 5 such that the zoom of the displayed image increases when the driving speed is increased such that it surpasses the predefined driving speed value, and selecting as second area 8" an area larger than the first area 5, where said second area 8" at least comprises the first area 5 such that the zoom of the displayed image increases when the driving speed is decreased such that it falls below the predefined driving speed value.

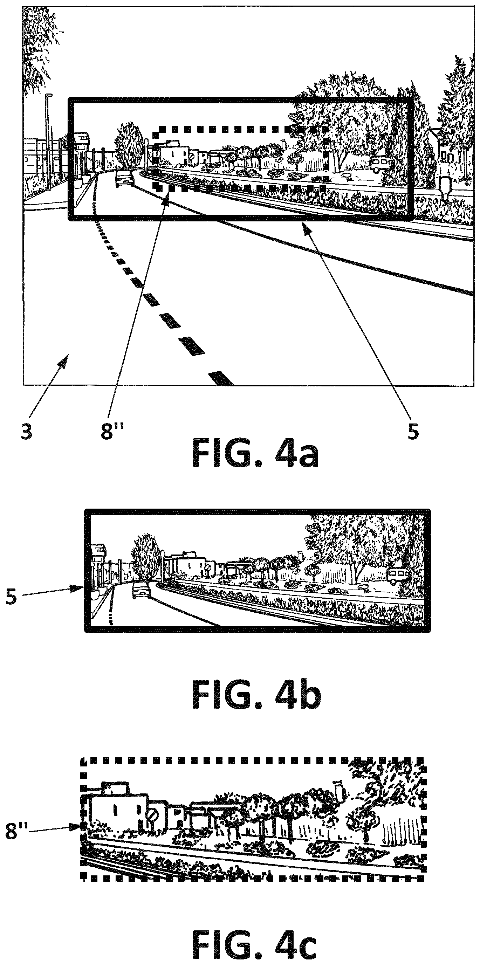

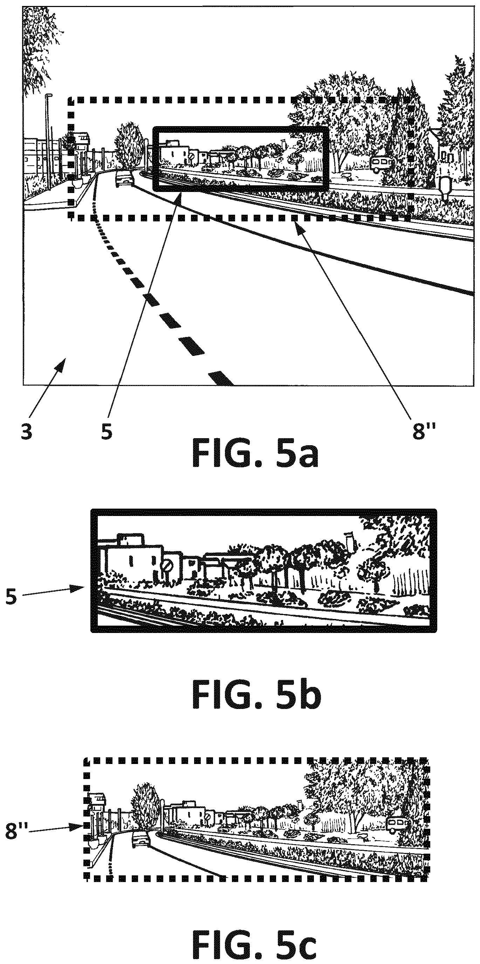

Figures 4 and 5 show the different areas that are displayed when the controller receives that a speed threshold is surpassed or fallen below.

Figure 4a shows the entire captured image 3, and indicates the first 5 and second 8" areas, respectively displayed in Figures 4b and 4c. According to the embodiment, the system controller 6 is configured to change from displaying the first area 5 to display a second area 8" when the driving speed is increased such that it surpasses a predefined speed threshold, wherein the second area 8" corresponds to a subarea of the first area 5. Thus, a smaller part of the captured image 3 is selected, and then an enlarged image is displayed when over speed is detected by the controller 6. In this way, the driver has a better view of the area of interest, which in this case, corresponds to a more detailed view of the farthest area from the vehicle.

Similarly, Figure 5a shows the entire captured image 3, and indicates the first 5 and second 8" areas, respectively displayed in Figures 5b and 5c. According to the embodiment, the system controller 6 is configured to change from displaying the first area 5 to display a second area 8" when the driving speed is decreased such that it falls below a predefined speed threshold, wherein the second area 8" comprises the first area 5. Thus, a larger part of the captured image 3 is selected, and then a reduced image is displayed when under speed is detected by the controller 6. In this way, the driver has a better view of the area of interest, which in this case, corresponds with a more general view of the rear area of the vehicle.

According to another preferred embodiment, the system controller 6 is adapted for selecting as second area 8"' an area corresponding to a rightward lateral displacement of the first area 5 such that the field of view is laterally displaced in a leftward direction in the event of a left lane change, and selecting as second area 8"' an area corresponding to a leftward lateral displacement of the first area 5 such that the field of view is laterally displaced in a rightward direction in the event of a right lane change.

Similarly, according to another preferred embodiment, the system controller 6 is adapted for selecting as second area 8"' an area corresponding to a rightward lateral displacement of the first area 5 such that the field of view is laterally displaced in a leftward direction in the event of a change in a steering angle toward a leftward direction, and selecting as second area 8"' an area corresponding to a leftward lateral displacement of the first area 5 such that the field of view is laterally displaced in a rightward direction in the event of a change in a steering angle toward a rightward direction.

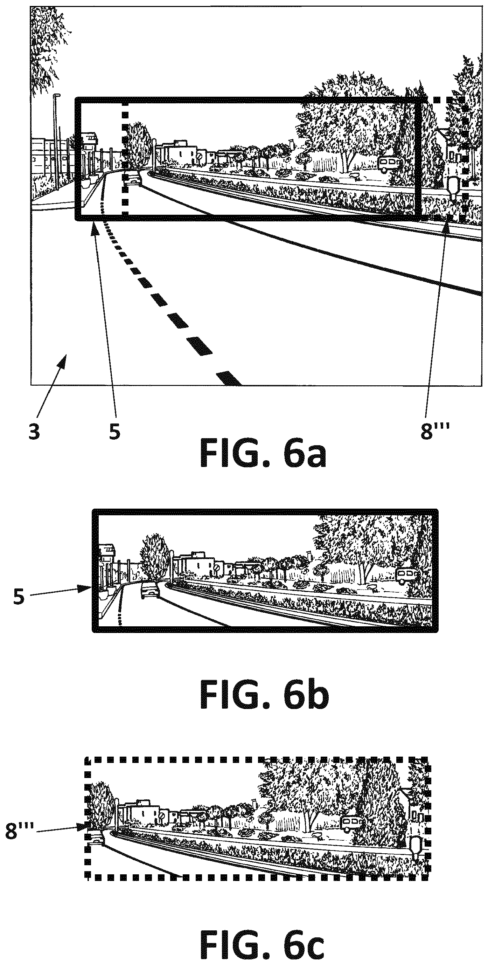

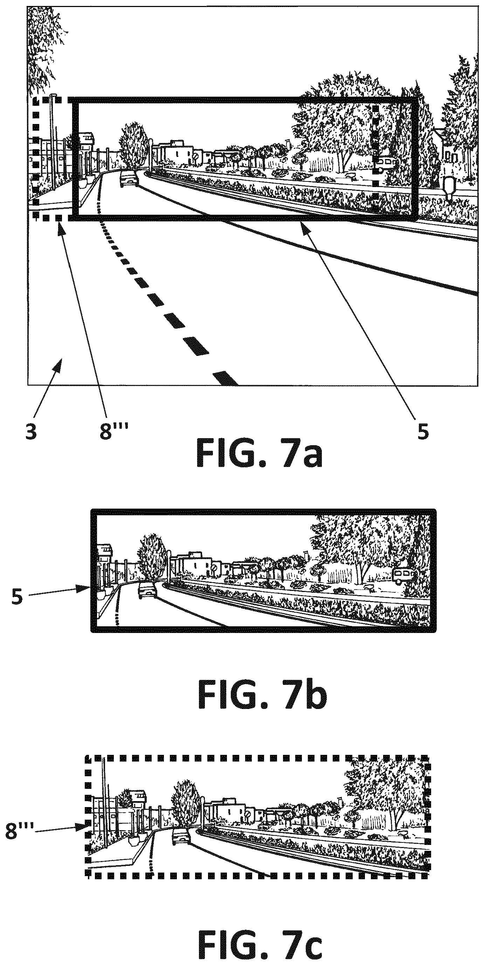

Figures 6 and 7 show the different areas that are displayed when the controller receives either a change in lane or a change in the steering angle value.

Preferably, the system 1 comprises a steering angle sensor in communication with the controller 6 and operatively configured to obtain a steering angle value.

Figure 6a shows the entire captured image 3, and indicates the first 5 and second 8"' areas, respectively displayed in Figures 6b and 6c. According to the showed embodiment, the system controller 6 is configured to change from displaying the first area 5 to display a second area 8"' corresponding to a rightward horizontal displacement of the first area 5, when a left lane change is received, and when a steering angle value associated to a left hand side steering wheel is received.

In both cases, a right-shift part of the captured image 3 is displayed when a leftward direction is detected by the controller 6. In this way, the driver has a better view of the area that he is invading.

Similarly, Figure 7a shows the entire captured image 3, and indicates the first 5 and second 8"' areas, respectively displayed in Figures 7b and 7c. According to the embodiment, the system controller 6 is configured to change from displaying the first area 5 to display a second area 8"' corresponding to a leftward horizontal displacement of the first area 5, when a right lane change is received, and when a steering angle value associated to a right hand side steering wheel is received.

Thus, a left-shift part of the captured image 3 is displayed when a rightward direction is detected by the controller 6. In this way, the driver has a better view of the area that he is invading.

Preferably, the system controller 6 is adapted for receiving an activation signal of a blinker, and for triggering a lane change event upon receiving said activation signal.

In another preferred embodiment, the rear vision system 1 further comprises at least one surroundings sensor, at least one steering sensor, and a processor. The surroundings sensor is configured to acquire data on at least a portion of the surroundings of the vehicle to the side and/or to the rear. The steering sensor is configured to acquire steering angle data of the vehicle. The processor is adapted to process the data acquired by the at least one surroundings sensor to detect a moving object in the sensed portion of the surroundings of the vehicle, further adapted to process the steering angle data and to generate a lane change event if a moving object is detected and the steering angle is oriented towards the moving object. The processor may be an additional component or correspond with the system controller 6.

According to another preferred embodiment, the system controller 6 is adapted for determining a relative rightward and leftward rotation of the system 1 from the change in the roll angle, selecting as second area 8"" an area corresponding to a rightward rotation of the first area 5 such that the field of view is laterally rotated in a clockwise direction when the system 1 is rightwardly rotated about an horizontal axis, and selecting as second area 8"" an area corresponding to an leftward rotation of the first area 5 such that the field of view is laterally rotated in a counterclockwise direction when the system 1 is leftwardly rotated about an horizontal axis.

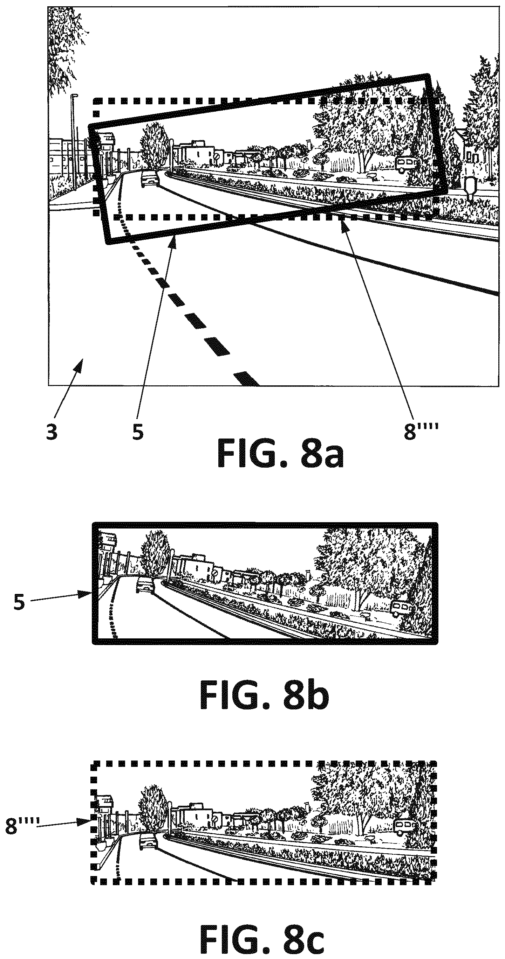

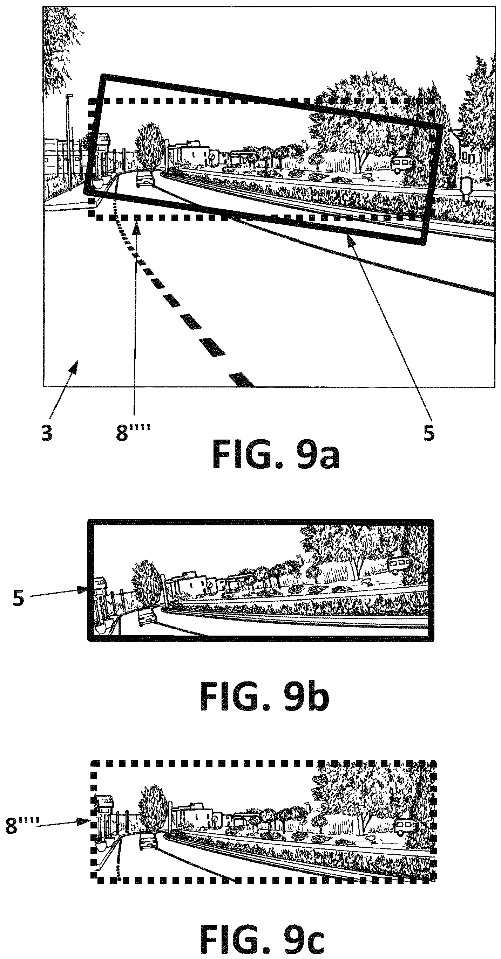

Figures 8 and 9 show the different areas that are displayed when the controller receives a change in the pitch angle value.

Preferably, the system 1 comprises a roll angle sensor in communication with the controller 6 and operatively configured to obtain a roll angle value. Alternatively, the roll angle value may be obtained by image processing, comparing the actual captured image 3 with the former captured image 3.

Figure 8a shows the entire captured image 3, and indicates the first 5 and second 8"" areas, respectively displayed in Figures 8b and 8c. According to the showed embodiment, the system controller 6 is configured to change from displaying the first area 5 to display a second area 8"" corresponding to a rightward rotation (clockwise direction) of the first area 5, when the system 1 (and vehicle) is rightward and horizontally moved according to the roll sensor information.

Thus, upper left and lower right parts of the captured image 3 are displayed when a rightward horizontal movement is detected by the controller 6. Thus, the invention provides a centred view of the ground (road) although the relative rotational movement about a horizontal axis of the vehicle. This way, the system absorbs undesired movements, and shows a centred image (second area 8"").

Similarly, Figure 9a shows the entire captured image 3, and indicates the first 5 and second 8"" areas, respectively displayed in Figures 9b and 9c. According to the showed embodiment, the system controller 6 is configured to change from displaying the first area 5 to display a second area 8"' corresponding to a leftward rotation (counterclockwise direction) of the first area 5, when the system 1 (and vehicle) is leftward and horizontally moved according to the roll sensor information

Thus, lower left and upper right parts of the captured image 3 are displayed when a leftward horizontal movement is detected by the controller 6. Thus, the invention provides a centred view of the ground (road) although the relative rotational movement about a horizontal axis of the vehicle. This way, the system absorbs undesired movements, and shows a centred image (second area 8"").

Preferably, the system controller is configured to determine a rightward and leftward rotation of the system 1 by comparing representative parameters contained on the actual and the former captured images 3. Preferably, said representative parameters at least comprise the location of the road vanishing point on the captured image 3.

According to another preferred embodiment, the system controller 6 is adapted for performing road monitoring based on road monitoring information, and selecting as second area 8""' an area of the first area 5 that is related with the road vanishing point of the image. Alternatively, the system controller 6 is adapted for selecting as second area 8""' a predetermined image that may be related with the road vanishing point. This predetermined image may be the initial image, i.e. the first area 5.

Preferably, the system controller 6 is further adapted for comparing representative parameters contained on the actual and the former captured images 3, and/or performing lane tracking, to provide road monitoring information.

Alternatively, the system 1 comprises an external device adapted to provide road monitoring information to the controller 6.

The rear vision system 1 can be adapted for displaying the second area 8-8"" in a continuous (progressive) or discrete form. This can be achieved by setting thresholds in the controller 6 or controlling the operating frequency of the controller 6. Alternatively, the displaying can be managed by the sensors sensitivity.

According to the invention, the system controller 6 is adapted for determining a change in the steering angle when the steering angle change value surpasses a predefined steering angle sensitive value, and/or determining a change in the pitch angle when the pitch angle change value surpasses a predefined pitch angle sensitive value, and/or determining a change in the roll angle when the roll angle change value surpasses a predefined roll angle sensitive value.

Preferably, the rear vision system 1 at least comprises a steering sensor operatively configured to obtain a steering angle value, a pitch angle sensor operatively configured to obtain a pitch angle value, and a roll angle sensor operatively configured to obtain a roll angle value. These sensors can be placed on the steering wheel or the wheels of a vehicle.

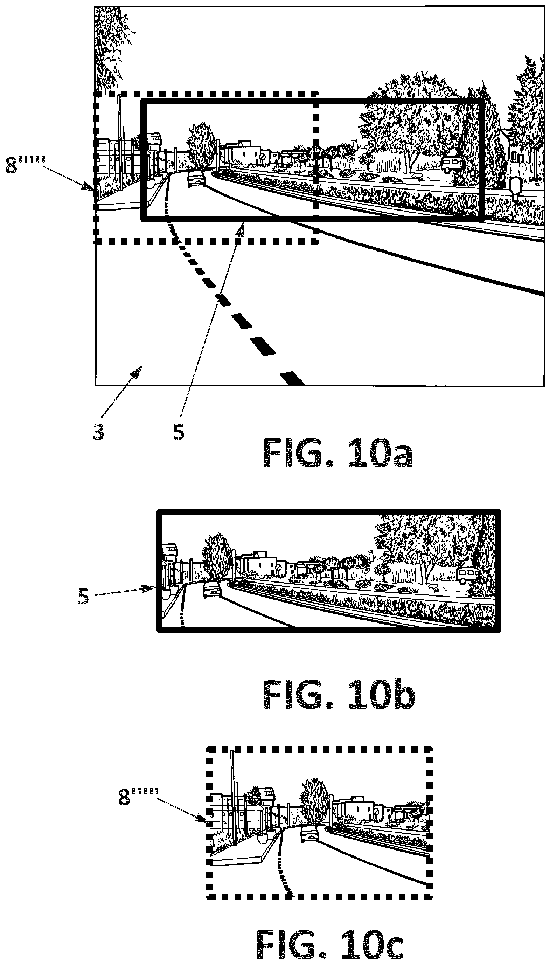

As shown in Figures 2, 3, 6, 7, 8, 9 and 10, the first 5 and second areas 8', 8"', 8"", 8""' have, preferably, the same dimensions.

Also, as shown in Figures 4, 5, 6 and 7, and according to another preferred embodiment, the second area 8", 8"' is vertically centred with respect to the first area 5.

Additionally, as shown in Figures 4, 5, 6 and 7, and according to another preferred embodiment, the second area 8", 8"' is horizontally centred with respect to the first area 5.

In another preferred embodiment, the rear vision system 1 further comprises a display 4 to show the first 5 and second 8' - 8""' areas of the captured image 3. Preferably, the rear vision system 1 further comprises a rear-view mirror 7, where the display 4 is integrated into the rear-view mirror 3.

In another preferred embodiment, the display 4 may comprise a touch screen and/or a keyboard to enable the user selecting the area to be displayed (second area), by scrolling through the image, zooming in or out.

The rear view system of the invention allows assisting drivers at least when the controller detects: a change in driving direction from a forward driving direction to a reverse driving direction or vice versa, an increase or decrease in driving speed with respect to a predefined driving speed value, a change in lane, a change in steering angle, a change in pitch angle, a change in roll angle, and road monitoring. Therefore, the invention improves driving safety and driver comfort, since only the area of interest is shown to the driver.

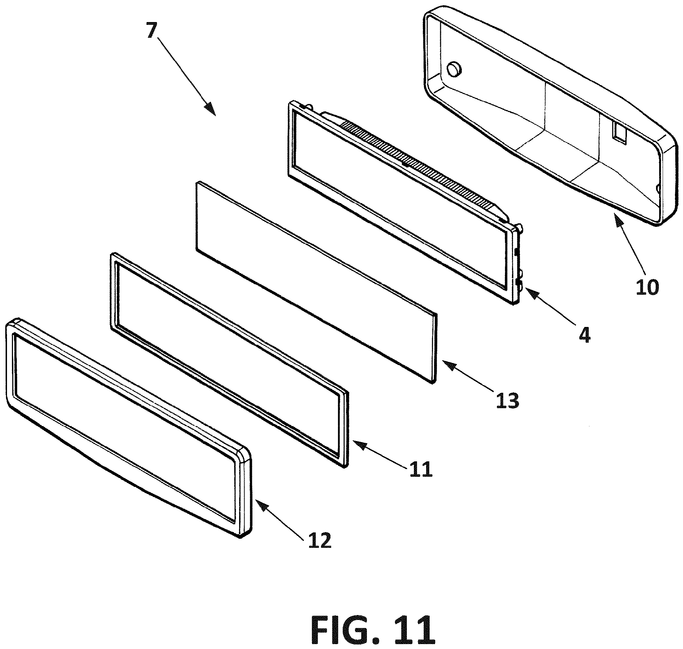

Figure 11 shows an exploded view of a preferred embodiment of the rear-view mirror 7. Preferentially, the rear-view mirror 7 is an interior rear-view mirror.

The rear-view mirror 7 comprises a display 4 integrated into the rear-view mirror 7 configured to display the first 5 and second 8' - 8"' areas of the captured image 3. Further, the rear-view mirror 7 may comprise a half mirror 13, integrated into the rear-view mirror 7 and mounted onto the display 4.

The half mirror 13 is adapted for showing the image displayed if it receives more light from the display 4 than from the outside, and for showing a reflected image if it receives more light from the outside than from the display 4. The half mirror 13, also known as one-way mirror, is an ordinary mirror that is coated on its back surface with a thin layer of metal, usually silver or aluminium, such that part of the light is reflected, and the other part penetrates the mirror 13.

The rear-view mirror 7 preferentially comprises a housing having a rear cover 10 and a front frame 12, a rubber pad 11, the half mirror 13, and the display 4. The housing encloses and protects the elements that form the rear-view mirror 7, and the rubber pad 11 helps to secure the enclosed elements.

Using this kind of mirror and mounting it directly over the display 4, the invention allows offering two working modes, one when the display is on, and the other one when the display is off.

Finally, according to another aspect of the present invention, the invention further comprises a vehicle comprising at least one of a dashboard, a header, a windshield or an A-pillar, a display 4 located on a surface of one of the dashboard, the header, the windshield or the A-pillar, and the rear vision system 1 as described, where the display 4 is adapted for displaying the first 5 and a second area 8' - 8""' of the captured image 3.

## Claims

1. A rear vision system (1) for a motor vehicle comprising:
- a camera (2) for capturing an image (3) within a field of view rear to the vehicle, and
- a system controller (6) adapted for:
(i) displaying a first area (5) of the captured image (3),
(ii) receiving and processing vehicle driving and/or user information,
(iii) selecting a second area (8' - 8""') of the captured image (3) depending on the received information, where each of the first and second areas (5, 8' - 8""') are smaller than the area of the captured image (3), and where the vehicle driving information comprises at least one of the following:
- a change in driving direction from a forward driving direction to a reverse driving direction or vice versa,
- an increase or decrease in driving speed with respect to a predefined driving speed value,
- a lane change, and
- a road monitoring information,
(iv) and, displaying the second area (8' - 8""') of the captured image (3);
the rear vision system (1) being **characterized in that** the vehicle driving information further comprises at least one of the following:
- a change in steering angle,
- a change in pitch angle, and
- a change in roll angle;
and wherein the system controller (6) is adapted for determining a change in the steering angle when the steering angle change value surpasses a predefined steering angle sensitive value, and/or determining a change in the pitch angle when the pitch angle change value surpasses a predefined pitch angle sensitive value, and/or determining a change in the roll angle when the roll angle change value surpasses a predefined roll angle sensitive value.

2. Rear vision system (1), according to claim 1, where the system controller (6) is adapted for:
(i) selecting as second area (8') an area corresponding to a downward vertical displacement of the first area (5) such that the field of view is vertically displaced in a downward direction, when the driving direction is changed from a forward driving direction to a reverse driving direction, and
(ii) selecting as second area (8') an area corresponding to an upward vertical displacement of the first area (5) such that the field of view is vertically displaced in an upward direction, when the driving direction is changed from a reverse driving direction to a forward driving direction.

3. Rear vision system (1), according to any of the preceding claims, where the system controller (6) is adapted for:
(i) selecting as second area (8") a part of the area of the first area (5) such that the zoom of the displayed image increases when the driving speed is increased such that it surpasses the predefined driving speed value, and
(ii) selecting as second area (8") an area larger than the first area (5), where said second area (8") at least comprises the first area (5) such that the zoom of the displayed image decreases when the driving speed is decreased such that it falls below the predefined driving speed value.

4. Rear vision system (1), according to any of the preceding claims, where the system controller (6) is adapted for:
(i) selecting as second area (8"') an area corresponding to a rightward lateral displacement of the first area (5) such that the field of view is laterally displaced in a leftward direction in the event of a left lane change, and in the event of a change in a steering angle toward a leftward direction, and
(ii) selecting as second area (8"') an area corresponding to a leftward lateral displacement of the first area (5) such that the field of view is laterally displaced in a rightward direction in the event of a right lane change, and in the event of a change in a steering angle toward a rightward direction.

5. Rear vision system (1), according to any of the preceding claims, where the system controller (6) is adapted for:
(i) determining a relative rightward and leftward rotation of the system (1) from the change in the roll angle,
(ii) selecting as second area (8"") an area corresponding to a rightward rotation of the first area (5) such that the field of view is laterally rotated in a clockwise direction when the system (1) is rightwardly rotated about an horizontal axis, and
(iii) selecting as second area (8"") an area corresponding to an leftward rotation of the first area (5) such that the field of view is laterally rotated in a counterclockwise direction when the system (1) is leftwardly rotated about an horizontal axis.

6. Rear vision system (1), according to claim 5, wherein the system controller (6) determines a rightward and leftward rotation of the system (1) by comparing representative parameters contained on the actual and the former captured images (3), said representative parameters at least comprising the location of the road vanishing point on the captured image (3).

7. Rear vision system (1), according to any of the preceding claims, where the system controller (6) is adapted for:
(i) determining a relative upward and downward vertical movement of the system (1) from the change in the pitch angle,
(ii) selecting as second area (8') an area corresponding to a downward vertical displacement of the first area (5) such that the field of view is vertically displaced in a downward direction, when the system (1) is downwardly moved, and
(iii) selecting as second area (8') an area corresponding to an upward vertical displacement of the first area (5) such that the field of view is vertically displaced in an upward direction, when the system (1) is upwardly moved.

8. Rear vision system (1), according to claim 7, wherein the system controller (6) determines an upward and downward vertical movement of the system (1) by comparing representative parameters contained on the actual and the former captured images (3), said representative parameters at least comprising the location of the road vanishing point on the captured image (3).

9. Rear vision system (1), according to any of the preceding claims, where the system controller (6) is adapted for:
(i) performing road monitoring based on road monitoring information,
(ii) selecting as second area (8""') at least one of the following:
(a) an area corresponding to the first area (5) of the captured image (3) that is related to the road vanishing point of the first area (5),
(b) an area of the captured imaged (3) in which the road lane is horizontally centred with respect to the captured imaged (3).

10. Rear vision system (1), according to claim 9, wherein the system controller (6) is further adapted for comparing representative parameters contained on the actual and the former captured images (3), and/or performing lane tracking, to provide road monitoring information.

11. Rear vision system (1), according to any of claims 4, 5-6, and 7-8, further comprising at least one of the following sensors:
(i) a steering sensor operatively configured to obtain a steering angle value,
(ii) a pitch angle sensor operatively configured to obtain a pitch angle value, and
(iii) a roll angle sensor operatively configured to obtain a roll angle value.

12. Rear vision system (1), according to any of the claims 1-2 and 4-11, where the first (5) and second areas (8', 8"', 8"", 8""') have same dimensions.

13. Rear vision system (1), according to any of the preceding claims, further comprising a rear-view mirror (7), and a display (4) integrated into the rear-view mirror (7) for displaying the first (5) and second (8' - 8""') areas of the captured image (3).

14. Rear vision system (1), according to claim 1, wherein it further comprises:
- at least one surroundings sensor configured to acquire data on at least a portion of the surroundings of the vehicle to the side and/or to the rear,
- at least one steering sensor configured to acquire steering angle data of the vehicle, and
- a processor adapted to process the data acquired by the at least one surroundings sensor to detect a moving object in the sensed portion of the surroundings of the vehicle, further adapted to process the steering angle data and to generate a lane change event if a moving object is detected and the steering angle is oriented towards the moving object.

15. Vehicle comprising at least one of a dashboard, a header, a windshield or an A-pillar, a display (4) located on a surface of one of the dashboard, the header, the windshield or the A-pillar, and the rear vision system (1) according to any of claims 1 to 14, where the display (4) is adapted for displaying the first (5) and a second area (8' - 8""') of the image (3) captured by the camera (2) of the rear vision system (1).

## Patentansprüche

1. Rückfahrkamerasystem (1) für ein Kraftfahrzeug, umfassend:
- eine Kamera (2) zur Aufnahme eines Bildes (3) in einem Sichtfeld hinter dem Fahrzeug und
- eine Systemsteuerung (6), die ausgestaltet ist:
(i) einen ersten Bereich (5) des aufgenommenen Bildes (3) anzuzeigen,
ii) Fahrzeugfahr- und/oder Benutzerinformationen entgegenzunehmen und zu verarbeiten,
(iii) einen zweiten Bereich (8' - 8""') des aufgenommenen Bildes (3) in Abhängigkeit von den empfangenen Informationen auszuwählen, wobei jeder des ersten und zweiten Bereichs (5, 8' - 8""') kleiner ist als der Bereich des aufgenommenen Bildes (3), und wobei die Fahrzeugfahrinformationen mindestens eine der nachfolgenden Informationen umfassen:
- eine Änderung der Fahrtrichtung von einer Vorwärtsfahrtrichtung in eine Rückwärtsfahrtrichtung oder umgekehrt,
- eine Erhöhung oder Verminderung der Fahrgeschwindigkeit gegenüber einem vorgegebenen Fahrgeschwindigkeitswert,
- einen Spurwechsel und
- eine Straßenüberwachungsinformation,
und
(iv) den zweiten Bereich (8' - 8""') des aufgenommenen Bildes (3) anzuzeigen;
wobei das Rückfahrkamerasystem (1) **dadurch gekennzeichnet ist, dass** die Fahrzeugfahrinformation weiterhin mindestens eine der folgenden Informationen umfasst:
- eine Änderung des Lenkwinkels,
- eine Änderung des Nickwinkels und
- eine Änderung des Rollwinkels;
und wobei die Systemsteuerung (6) ausgestaltet ist, eine Änderung des Lenkwinkels zu bestimmen, wenn der Wert der Lenkwinkeländerung einen vordefinierten Lenkwinkel-abhängigen Wert überschreitet, und/oder eine Änderung des Nickwinkels zu bestimmen, wenn der Wert der Nickwinkeländerung einen vordefinierten Nickwinkel-abhängigen Wert überschreitet und/oder eine Änderung des Rollwinkels zu bestimmen, wenn der Wert der Rollwinkeländerung einen vordefinierten Rollwinkel-abhängigen Wert überschreitet.

2. Rückfahrkamerasystem (1) nach Anspruch 1, wobei die Systemsteuerung (6) ausgestaltet ist:
(i) als zweiten Bereich (8') einen Bereich auszuwählen, der einer vertikalen Verschiebung des ersten Bereichs (5) nach unten entspricht, so dass das Sichtfeld vertikal nach unten verschoben wird, wenn die Fahrtrichtung von einer Vorwärtsfahrtrichtung in eine Rückwärtsfahrtrichtung geändert wird, und
(ii) als zweiten Bereich (8') einen Bereich auszuwählen, der einer vertikalen Verschiebung des ersten Bereichs (5) nach oben entspricht, so dass das Sichtfeld vertikal nach oben verschoben wird, wenn die Fahrtrichtung von einer Rückwärtsfahrtrichtung in eine Vorwärtsfahrtrichtung geändert wird.

3. Rückfahrkamerasystem (1) nach einem der vorhergehenden Ansprüche, wobei die Systemsteuerung (6) ausgestaltet ist:
(i) als zweiten Bereich (8") einen Teilbereich des ersten Bereichs (5) auszuwählen, so dass der Vergrößerungsfaktor des angezeigten Bildes zunimmt, wenn die Fahrgeschwindigkeit soweit erhöht wird, dass sie den vorgegebenen Fahrgeschwindigkeitswert überschreitet, und
(ii) als zweiten Bereich (8") einen Bereich auszuwählen, der größer als der erste Bereich (5) ist, wobei der zweite Bereich (8") zumindest den ersten Bereich (5) umfasst, so dass der Vergrößerungsfaktor des angezeigten Bildes abnimmt, wenn die Fahrgeschwindigkeit soweit verringert wird, dass sie unter den vorgegebenen Fahrgeschwindigkeitswert fällt.

4. Rückfahrkamerasystem (1) nach einem der vorhergehenden Ansprüche, wobei die Systemsteuerung (6) ausgestaltet ist:
(i) als zweiten Bereich (8"') einen Bereich auszuwählen, der einer seitlichen Rechtsverschiebung des ersten Bereichs (5) entspricht, so dass das Sichtfeld bei einem Spurwechsel nach links und bei einer Änderung eines Lenkwinkels nach links seitlich in Linksrichtung verschoben wird und
(ii) als zweiten Bereich (8"') einen Bereich auszuwählen, der einer seitlichen Linksverschiebung des ersten Bereichs (5) entspricht, so dass das Sichtfeld bei einem Spurwechsel nach rechts und bei einer Änderung des Lenkwinkels nach rechts seitlich in Rechtsrichtung verschoben wird.

5. Rückfahrkamerasystem (1) nach einem der vorhergehenden Ansprüche, wobei die Systemsteuerung (6) ausgestaltet ist:
(i) eine relative Rechts- und Linksdrehung des Systems (1) aus der Änderung des Rollwinkels zu bestimmen,
(ii) als zweiten Bereich (8"") einen Bereich auszuwählen, der einer Rechtsdrehung des ersten Bereichs (5) entspricht, so dass das Sichtfeld seitlich im Uhrzeigersinn gedreht wird, wenn das System (1) um eine horizontale Achse nach rechts gedreht wird, und
(iii) als zweiten Bereich (8"") einen Bereich auszuwählen, der einer Linksdrehung des ersten Bereichs (5) entspricht, so dass das Sichtfeld seitlich gegen den Uhrzeigersinn gedreht wird, wenn das System (1) um eine horizontale Achse nach links gedreht wird.

6. Rückfahrkamerasystem (1) nach Anspruch 5, wobei die Systemsteuerung (6) eine Rechts- und Linksdrehung des Systems (1) bestimmt, indem sie repräsentative Parameter vergleicht, die auf dem gegenwärtigen und dem zuvor aufgenommenen Bild (3) enthalten sind, wobei die repräsentativen Parameter zumindest die Position des Straßenfluchtpunktes auf dem aufgenommenen Bild (3) umfassen.

7. Rückfahrkamerasystem (1) nach einem der vorhergehenden Ansprüche, wobei die Systemsteuerung (6) ausgestaltet ist:
(i) eine relative vertikale Aufwärts- und Abwärtsbewegung des Systems (1) aus der Änderung des Nickwinkels zu bestimmen,
(ii) als zweiten Bereich (8') einen Bereich auszuwählen, der einer vertikalen Verschiebung des ersten Bereichs (5) nach unten entspricht, so dass das Sichtfeld vertikal nach unten verschoben wird, wenn das System (1) nach unten bewegt wird, und
(iii) als zweiten Bereich (8') einen Bereich auszuwählen, der einer vertikalen Verschiebung des ersten Bereichs (5) nach oben entspricht, so dass das Sichtfeld vertikal nach oben verschoben wird, wenn das System (1) nach oben bewegt wird.

8. Rückfahrkamerasystem (1) nach Anspruch 7, wobei die Systemsteuerung (6) eine vertikale Aufwärts- und Abwärtsbewegung des Systems (1) bestimmt, indem sie repräsentative Parameter vergleicht, die auf dem gegenwärtigen und dem zuvor aufgenommenen Bild (3) enthalten sind, wobei die repräsentativen Parameter zumindest die Position des Straßenfluchtpunktes auf dem aufgenommenen Bild (3) umfassen.

9. Rückfahrkamerasystem (1) nach einem der vorhergehenden Ansprüche, wobei die Systemsteuerung (6) ausgestaltet ist:
i) eine Straßenüberwachung auf der Grundlage von Straßenüberwachungsinformationen durchzuführen,
ii) als zweiten Bereich (8""') mindestens einen der folgenden Bereiche auswählen:
(a) einen Bereich, der dem ersten Bereich (5) des aufgenommenen Bildes (3) entspricht, der mit dem Straßenfluchtpunkt des ersten Bereichs (5) zusammenhängt
(b) einen Bereich des aufgenommenen Bildes (3), in dem die Fahrbahn in Bezug auf das aufgenommene Bild (3) horizontal zentriert ist.

10. Rückfahrkamerasystem (1) nach Anspruch 9, wobei die Systemsteuerung (6) ferner ausgestaltet ist, repräsentative Parameter zu vergleichen, die auf den gegenwärtigen und den zuvor aufgenommenen Bildern (3) vorhanden sind, und/oder Spurverfolgung durchzuführen, um Informationen zur Straßenüberwachung bereitzustellen.

11. Rückfahrkamerasystem (1) nach einem der Ansprüche 4, 5-6 und 7-8, das ferner mindestens einen der folgenden Sensoren umfasst:
i) einen Lenksensor, der so konfiguriert ist, dass er einen Lenkwinkelwert erhält,
(ii) einen Nickwinkelsensor, der so konfiguriert ist, dass er einen Nickwinkelwert erhält, und
(iii) einen Rollwinkelsensor, der so konfiguriert ist, dass er einen Rollwinkelwert erhält.

12. Rückfahrkamerasystem (1) nach einem der Ansprüche 1-2 und 4-11, wobei der erste (5) und der zweite Bereich (8', 8"', 8"", 8""') die gleichen Abmessungen haben.

13. Rückfahrkamerasystem (1) nach einem der vorhergehenden Ansprüche, das ferner einen Rückspiegel (7) und ein in den Rückspiegel (7) integriertes Anzeigegerät (4) zur Anzeige des ersten (5) und zweiten (8' - 8""') Bereichs des aufgenommenen Bildes (3) umfasst.

14. Rückfahrkamerasystem (1) nach Anspruch 1, wobei es weiterhin umfasst:
- mindestens einen Umgebungssensor, der so konfiguriert ist, dass er Daten bezüglich zumindest eines Teils der Umgebung des Fahrzeugs zur Seite und/oder nach hinten erfasst,
- mindestens einen Lenksensor, der so konfiguriert ist, dass er Lenkwinkeldaten des Fahrzeugs erfasst und
- einen Prozessor, der ausgestaltet ist, die von dem mindestens einen Umgebungssensor erfassten Daten zu verarbeiten, um ein sich in dem erfassten Teil der Umgebung des Fahrzeugs bewegendes Objekt zu erfassen, und ferner ausgestaltet ist, die Lenkwinkeldaten zu verarbeiten und ein Spurwechselereignis zu erzeugen, wenn ein sich bewegendes Objekt erfasst wird und der Lenkwinkel auf das sich bewegende Objekt ausgerichtet ist.

15. Fahrzeug mit mindestens einem Armaturenbrett, einem Kopfteil, einer Windschutzscheibe oder einer A-Säule, einem Anzeigegerät (4), das sich auf einer Oberfläche des Armaturenbretts, des Kopfteils, der Windschutzscheibe oder der A-Säule befindet, und dem Rückfahrkamerasystem (1) nach einem der Ansprüche 1 bis 14, wobei das Anzeigegerät (4) ausgestaltet ist, den ersten (5) und einen zweiten Bereich (8' - 8""') des von der Kamera (2) des Rückfahrkamerasystems (1) erfassten Bildes (3) anzuzeigen.

## Revendications

1. Système vision arrière (1) destiné à un véhicule motorisé comprenant :
- une caméra (2) permettant de prendre une image (3) dans un champ de vision situé à l'arrière du véhicule, et
- un régulateur de système (6) susceptible :
(i) d'afficher une première surface (5) de l'image (3) prise,
(ii) de recevoir et de traiter une information de déplacement du véhicule et/ou d'utilisateur,
(iii) de sélectionner une seconde surface (8'- 8""') de l'image (3) prise en fonction de l'information reçue, la première surface et la seconde surface (5, 8' - 8""') étant plus petites que la surface de l'image (3) prise, et l'information de déplacement du véhicule comprenant au moins l'une des informations suivantes :
- une modification de la direction de déplacement d'une direction de déplacement vers l'avant à une direction de déplacement en sens inverse ou vice versa,
- une augmentation ou une diminution de la vitesse de déplacement par rapport à une valeur de vitesse de déplacement prédéfinie,
- un changement de file, et
- une information de surveillance routière, et
(iv) d'afficher la seconde surface (8', 8""') de l'image (3) prise,
le système de vision arrière (1) étant **caractérisé en ce que** l'information de déplacement du véhicule comprend en outre au moins l'une des informations suivantes :
- une modification de l'angle de direction,
- une modification de l'angle de tangage, et
- une modification de l'angle de roulis, et
le régulateur (6) du système est susceptible de déterminer une modification de l'angle de direction lorsque la valeur de la modification de l'angle de direction dépasse une valeur sensible prédéfinie de l'angle de direction, et/ou de déterminer une modification de l'angle de tangage lorsque la valeur de la modification de l'angle de tangage dépasse une valeur sensible prédéfinie de l'angle de tangage, et/ou de déterminer une modification de l'angle de roulis lorsque la valeur de la modification de l'angle de roulis dépasse une valeur sensible prédéfinie de l'angle de roulis.

2. Système de vision arrière (1) conforme à la revendication 1,
dans lequel le régulateur (6) du système est susceptible :
(i) de sélectionner en tant que seconde surface (8') une surface correspondant à un déplacement vertical vers le bas de la première surface (5) tel que le champ de vision soit déplacé verticalement vers le bas, lorsque la direction de déplacement passe d'une direction de déplacement vers l'avant à une direction de déplacement en sens inverse, et
(ii) de sélectionner en tant que seconde surface (8') une surface correspondant à un déplacement vertical vers le haut de la première surface (5) tel que le champ de vision soit déplacé verticalement vers le haut lorsque la direction de déplacement passe d'une direction de déplacement en sens inverse à une direction de déplacement vers l'avant.

3. Système de vision arrière (1) conforme à l'une quelconque des revendications précédentes,
dans lequel le régulateur (6) du système est susceptible :
(i) de sélectionner en tant que seconde surface (8") une partie de la surface de la première surface (5) telle que zoom de l'image affichée augmente lorsque la vitesse de déplacement est augmentée de sorte qu'elle dépasse la valeur de la vitesse de déplacement prédéfinie, et
(ii) de sélectionner en tant que seconde surface (8") une surface plus grande que la première surface (5) la seconde surface (8") comprenant au moins la première surface (5) de sorte que le zoom de l'image affichée diminue lorsque la vitesse de déplacement est diminuée de façon qu'elle tombe au-dessous de la valeur de la vitesse de déplacement prédéfinie.

4. Système de vision arrière (1) conforme à l'une quelconque des revendications précédentes,
dans lequel le régulateur (6) du système est susceptible :
(i) de sélectionner en tant que seconde surface (8"') une surface correspondant à un déplacement latéral vers la droite de la première surface (5) tel que le champ de vision soit déplacé latéralement vers la gauche lors d'un changement de file de gauche et d'une modification de l'angle de direction vers la gauche, et
(ii) de sélectionner en tant que seconde surface (8"') une surface correspondant à un déplacement latéral vers la gauche de la première surface (5) tel que le champ de vision soit déplacé latéralement vers la droite lors d'un changement de file de droite, et de modification de l'angle de direction vers la droite.

5. Système de vision arrière (1) conforme à l'une quelconque des revendications précédentes,
dans lequel le régulateur (6) du système est susceptible :
(i) de déterminer une rotation relative vers la droite et vers la gauche du système (1) à partir de la modification de l'angle de roulis,
(ii) de sélectionner en tant que seconde surface (8"") une surface correspondant à une rotation vers la droite de la première surface (5) telle que le champ de vision tourne latéralement dans le sens des aiguilles d'une montre lorsque le système (1) tourne vers la droite autour d'un axe horizontal, et
(iii) de sélectionner en tant que seconde surface (8"") une surface correspondant à une rotation vers la gauche de la première surface (5) telle que le champ de vision tourne latéralement dans le sens contraire au sens des aiguilles d'une montre lorsque le système (1) tourne vers la gauche autour d'un axe horizontal.

6. Système de vision arrière (1) conforme à la revendication 5,
dans lequel le régulateur (6) du système détermine une rotation vers la droite et vers la gauche du système (1) en comparant des paramètres représentatifs présents sur les images (3) actuelle et prise précédemment, ces paramètres représentatifs comprenant au moins la position du point de disparition de la route sur l'image (3) prise.

7. Système de vision arrière (1) conforme à l'une quelconque des revendications précédentes,
dans lequel le régulateur (6) du système est susceptible :
(i) de déterminer un déplacement vertical relatif vers le haut et vers le bas du système (1) à partir de la modification de l'angle de tangage,
(ii) de sélectionner en tant que seconde surface (8') une surface correspondant à un déplacement vertical vers le bas de la première surface (5) tel que le champ de vision soit déplacé verticalement vers le bas lorsque le système (1) est déplacé vers le bas, et
(iii) de sélectionner en tant que seconde surface (8') une surface correspondant à un déplacement vertical vers le haut de la première surface (5) tel que le champ de vision soit déplacé verticalement vers le haut lorsque le système (1) est déplacé vers le haut.

8. Système de vision arrière (1) conforme à la revendication 7,
dans lequel le régulateur (6) du système détermine un déplacement vertical vers le haut et vers le bas du système (1) en comparant des paramètres représentatifs présents sur les images (3) actuelle et prise précédemment, ces paramètres représentatifs comprenant au moins la position du point de disparition de la route sur l'image (3) prise.

9. Système de vision arrière (1) conforme à l'une quelconque des revendications précédentes,
dans lequel le régulateur (6) du système est susceptible :
(i) d'effectuer une surveillance routière à partir de l'information de surveillance routière,
(ii) de sélectionner en tant que seconde surface (8""') au moins l'une des surfaces suivantes :
(a) une surface correspondant à la première surface (5) de l'image (3) prise qui est en relation avec le point de disparition de la route sur la première surface (5),
(b) une surface de l'image (3) prise dans laquelle la file de la route est centrée horizontalement par rapport à l'image (3) prise.

10. Système de vision arrière (1) conforme à la revendication 9,
dans lequel le régulateur (6) du système est en outre susceptible de comparer des paramètres représentatifs présents sur les images (3) actuelle et prise précédemment et/ou d'effectuer un suivi de file pour fournir l'information de surveillance routière.

11. Système de vision arrière (1) conforme à l'une quelconque des revendications 4, 5, 6, et 7, 8, comprenant au moins l'un des capteurs suivants :
(i) un capteur de direction opérativement réalisé pour obtenir la valeur de l'angle de direction,
(ii) un capteur d'angle de tangage opérativement réalisé pour obtenir la valeur de l'angle de tangage, et
(iii) un capteur d'angle de roulis opérativement réalisé pour obtenir la valeur de l'angle de roulis.

12. Système de vision arrière (1) conforme à l'une quelconque des revendications 1-2 et 4-11, dans lequel la première surface (5) et les secondes surfaces (8', 8"', 8"", 8""') ont les mêmes dimensions.

13. Système de vision arrière (1) conforme à l'une quelconque des revendications précédentes comprenant en outre un rétroviseur (7) et un affichage (4) intégré dans le rétroviseur (7) pour afficher la première surface (5) et les secondes surfaces (8', 8""') de l'image (3) prise.

14. Système de vision arrière (1) conforme à la revendication 1, comprenant en outre :
- au moins un capteur d'environnement réalisé pour acquérir des données sur au moins une partie de l'environnement du véhicule latéralement et/ou vers l'arrière,
- au moins un capteur de direction réalisé pour acquérir des données de l'angle de direction du véhicule, et
- un processeur réalisé pour traiter les données acquises par le capteur d'environnement pour détecter un objet mobile dans la partie détectée de l'environnement du véhicule et en outre susceptible de traiter les données de l'angle de direction et de générer un événement de changement de file si un objet mobile est détecté et que l'angle de direction est orienté vers cet objet mobile.

15. Véhicule comprenant un tableau de bord et/ou une partie d'affichage tête haute, et/ou un pare-brise, et/ou une colonne A, un affichage (4) situé sur une surface du tableau de bord et/ou de la partie d'affichage tête haute et/ou du pare-brise et/ou de la colonne A, et, un système de vision arrière (1) conforme à l'une quelconque des revendications 1 à 4, l'affichage (4) étant susceptible d'afficher la première surface (5) et une seconde surface (8', 8""') de l'image (3) prise par la caméra (2) du système de vision arrière (1).
